# EUROPEAN PATENT SPECIFICATION

(11) **EP 4 052 163 B1**
(45) Date of publication and mention of the grant of the patent: **07.06.2023**
(21) Application number: 20793745.9
(22) Date of filing: 28.10.2020
(51) Int. Cl.: G06F 21/76, G06F 21/85

(54) **A SECURE HARDWARE PROGRAMMABLE ARCHITECTURE**
SICHERE HARDWAREPROGRAMMIERBARE ARCHITEKTUR
ARCHITECTURE MATÉRIELLE PROGRAMMABLE SÉCURISÉE

(30) Priority: 29.10.2019 EP 19205977
(43) Date of publication of application: 07.09.2022
(73) Proprietor: Silicon Mobility SAS, 06560 Valbonne (FR)
(72) Inventor: DOUZANE, Khaled, 06130 Grasse (FR); CHILLIE, Cedric, 83440 Tanneron (FR); LEBRUN, Anselme, 06250 Mougins (FR)
(74) Representative: Arnold & Siedsma
(86) International application number: PCT/EP2020/080325
(87) International publication number: WO 2021/083978

(56) References cited:
- EP-A1- 2 972 785
- Khaled Douzane: "FPCU (Field Programmable Control Unit) New semiconductor architecture to boost HEV and EV systems White Paper Contents", , 5 May 2017 (2017-05-05), XP055675526, Retrieved from the Internet: URL:https://www.silicon-mobility.com/silic on-mobility/wp-content/uploads/2019/02/Lea rn_how_OLEA_T222_FPCU_can_boost_HEV_and_EV _control_systems.pdf [retrieved on 2020-03-11]

## Description

### FIELD OF THE INVENTION

The invention relates to the electric system digital control domain, in particular it is targeting (but not limited to) control of power train of pure electric or hybrid vehicle electric systems (like motors but also DC/DC converters) that require hard real time and safe control. The invention is about providing highest level of security features targeting present and future security challenges that apply to the above fields of application with highest level of functional safety standards. The invention combines the state-of-art cryptographic and anti-hacking functions with on-chip programmable hardware and accelerators.

### BACKGROUND OF THE INVENTION

The invention is suited for electric arrangements (also denoted FPCU), comprising: a plurality of functional modules, and interconnect fabric connecting the functional modules and providing communication between those functional modules, especially, wherein one or more of said functional modules being a hardware programmable unit, being a programmable logic matrix.

The invention is about providing security by enabling (long-term) use of (as functional module) a specific secure sub-system featuring state-of-art cryptographic and anti-hacking functions within such FPCU kind of components that basically features (as other functional modules):
- Several CPU core with conventional on-chip program and data memories
- A sub-system featuring multiple peripherals around one or multiple flexible logic units optionally capable of task switching and spatial segregation.

In the emerging context of connected vehicle, those kinds of application are more and more subject to security concerns related to :
- Protection against hackers that would take control over the vehicle
- Protection of the firmware update procedures when using "Over-The-Air" update scenario
- Protection of the software IP executed on the FPCU
- Checking of the firmware integrity (against hacking of electrical corruptions)

Until recently, the security management have been managed through central "bridges" being the only system in direct contact with external world (e.g. : connected to cloud). This bridge was responsible for all the secure scenario. Thus all other electronic systems were hidden behind it.

Now, the vehicle network architecture is moving to a much more de-centralized scheme. This means that, potentially, any computing resource of the vehicle can be in more-or-less direct contact with external networks, hence also more critical ones like power-train controllers.

Thus, the requirement for security scenario handling in any computing component became mandatory.

As mentioned before, security matters are more and more critical in automotive applications. So, next generation electronic components and arrangements must provide the necessary functions that permit to handle the secure scenarios and the secure attack counter-measures as well.

Those elements are well covered by many commercial offers that properly handle the security functions as they are known at present time.

However, the security domain is evolving very fast. The hackers technics are more and more complex and the cryptographic standard are also evolving. As an example, some widely used cryptography algorithms, which theoretically require the equivalent of thousands years of computing to be hacked with a modern computer may be hacked only in a few minutes with future quantum computers. This is a critical problem in the domain of automotive where components life-time is significantly longer than other domains (like consumer). This means that a secure sub-system must be able to handle new security challenges over time for 10 years or more.

The invention is especially focusing on FPCU's, primarily targeting hard real-time applications with the strongest functional safety requirements levels (ASIC-D), designed to offer the best-in-class level in both real-time and safety domains.

### STATE-OF-THE ART SOLUTIONS

In relation to security features flexibility, the typical answer to previous challenges is to integrate a CPU core to the secure sub-system. Therefore, the secure functions can be upgraded with software updates.

However, this strategy suffers from following limitations that makes it hardly acceptable for the automotive applications that we are targeting:
- This strategy is not valid for long-life products as required CPU power cannot be properly anticipated in advance. So we would put much more CPU power than necessary; thus having an unacceptable impact on device cost.
- Cryptography algorithms require a lot of processing resources (hardware SHA processing time is x10 longer than hardware processing time) and as a worst-case some future cryptography algorithms may not be able to run on implemented processing resources.
- This approach is very limited for counter-measures implementation as these often rely on hardware resources.

In relation to balancing safety and real-time aspects versus security, the conventional approach would consist in adding some software stack able to synchronize the activity of both real-time and security system and implement arbitration policy that would guarantee the functional safety behavior while allowing secure counter-measures.

Again, the reaction time is an issue here.

Indeed, the necessary software should be aware of the current real-time state of the system to be able to take the appropriate decision at the appropriate time.

However, in the best-in-class FPCU systems targeted, the hard real-time algorithms are executed inside the real-time processing sub-system (featuring some hardware programmable flexible logic units) without any fine-grain synchronization to the CPU core. Anyway, the CPU would not be fast enough to synchronize with the hardware activity also.

EP 2 972 785 discloses qualifying transactions originating from central processor units and processor cores based on security attributes generated for transactions. An SoC includes processor cores connected to an IO fabric which is connected to devices. When a device initiates a transaction to access another device, a security attribute of initiator (SAI) is generated. The SAI is validated in the fabric before the transaction is executed.

The document titled "FPCU (Field Programmable Control Unit) New semiconductor architecture to boost HEV and EV systems White Paper Contents" by Khaled Douzane discloses a semiconductor architecture called Field Programmable Control Unit (FPCU), designed for automotive powertrain control application. Combines a flexible and parallel hardware architecture for the real-time processing and control of sensors and actuators coupled to a standard CPU. The flexible and parallel architecture relies on tightly coupled autonomous actuation/acquisition peripherals and a programmable logic fabric interconnected with parallel data paths.

### AIM OF THE INVENTION

The invention aims at adding a future proof security sub-system to the above described architectures while avoiding situations where this secure function could be in conflict with (best-in-class) real-time and/or safety requirement in case the secure sub-system may interpret some safety related fault as security attacks (example : artefact on clocks or power supply). So, the secure sub-system could apply some counter measures to prevent the hacking (example: cutting the communications through CAN ports). This can obviously be a very dangerous decision...

### SUMMARY OF THE INVENTION

The invention is about providing highest level of security features targeting present and future security challenges with highest level of functional safety standards by defining a specially adapted architecture within such FPCU kind of components.

The invention is therefore providing security by enabling (long-term) use of (as functional module) a specific secure sub-system featuring state-of-art cryptographic and anti-hacking functions within such FPCU kind of components in particular means to efficiently extend the secure sub-system capabilities so that the FPCU component is ready for long term security challenges.

In a first aspect the invention provides an electric arrangement, comprising: (a) functional modules, which can serve both as transaction initiators or transaction targets, whereby a transaction initiating functional module may need a transaction target functional module to execute a function for and on its behalf; (b) a first interconnect fabric connecting the functional modules and providing communication between those functional modules; wherein the (electric) arrangement being arranged in that a selected transaction initiation functional module has temporally exclusive access to transaction target functional module(s), executing a function for and on its behalf, to ensure that transaction initiating functional modules other than the selected transaction initiation functional module, have no uncontrolled access thereto, wherein said selected transaction initiation functional module being a hardware secure module.

In a second aspect the invention provides a secure transaction mechanism wherein transaction initiating functional modules other than the selected transaction initiation functional module, have only access via the first interconnect fabric after initiating by said other transaction initiating functional modules a service request to said selected transaction initiation functional module to configure protection units connected to such other transaction initiating functional modules accordingly subject to the selected transaction initiation functional module its approval.

In a third aspect the invention provides various interconnect arrangements and the considerations related to the above to be taken into account.

### BRIEF DESCRIPTION OF THE DRAWINGS

Figure 1 (0100) illustrates a conventional FPCU architecture (without Flexible hardware secure module).
Figure 2 (0200) provides an exemplary use of the invented concept.
Figure 3 (0300) explains the triggers hardware management architecture within an FPCU component in relation to the specific considerations to be made to be secure in accordance with the invention.
Figure 4 (0400) describes a use case in relation to Figure 3 (0300).
Figure 5 (0500) introduces the concept of virtual boundary in relation to Figure 3 (0300) and 4 (0400).
Figure 6 (0600) explain a typical interconnect structure in FPCU in relation to the specific considerations to be made to be secure in accordance with the invention.
Figure 7 (0700) describes a further use case in relation a hardware secure module exploiting peripheral resources.
Figure 8 (0800) introduces the concept of virtual boundary in relation to Figure 7 (0700).
Figure 9 (0900) explains the invention in the context of matrix switching and an appropriate mechanism to achieve security.

### DETAILED DESCRIPTION

The invention relates to an (electric) arrangement, comprising: (a) functional modules, which can serve both as transaction initiators or transaction targets, whereby a transaction initiating functional module may need a transaction target functional module to execute a function for and on its behalf; (b) a first interconnect fabric connecting the functional modules and providing communication between those functional modules; wherein the (electric) arrangement being arranged in that a selected transaction initiation functional module has (temporally) exclusive access to transaction target functional module(s), executing a function for and on its behalf, to ensure that transaction initiating functional modules other than the selected transaction have no uncontrolled access thereto (via the interconnect fabric).

Typically said selected transaction initiation functional module is a hardware secure module (for instance with cryptographic capabilities).

The invention in particular relates to an (electric) arrangement, comprising: (a) functional modules, which can serve both as transaction initiators or transaction targets, whereby a transaction initiating functional module may need a transaction target functional module to execute a function for and on its behalf; (b) a first interconnect fabric connecting the functional modules and providing communication between those functional modules; characterized in that, for ensuring that a selected transaction initiation functional module has (temporally) exclusive access to transaction target functional module(s) executing a function for and on its behalf, protection means are provided, to ensure that transaction initiating functional modules other than the selected transaction initiation functional module, have no uncontrolled access thereto (via the interconnect fabric).

In an embodiment of the invention said protection means comprises: one or more protection units provided (between said modules and part of said first interconnect fabric) for each of said transaction target functional modules; whereby the configuring of said protection units is (directly or indirectly) controlled by said selected transaction initiation functional module (wherein said protection units provide transaction filtering).

In an embodiment of the invention transaction initiating functional modules other than the selected transaction initiation functional module, have only access via the first interconnect fabric after initiating by said other transaction initiating functional modules a service request to said selected transaction initiation functional module to configure related protection units accordingly subject to its approval (hence controlled access).

In an embodiment of the invention in the (electric) arrangement, the one or more protection units are further connected by a second interconnect fabric for configuring those protection units, whereby a further protection unit, between said first and second interconnect fabric is provided; and the configuring of said further protection unit is (directly or indirectly) controlled by said selected transaction initiation functional module.

In alternative embodiment of the invention in the (electric) arrangement, wherein one or more protection units are further connected by one or more second interconnect fabrics for configuring those protection units, whereby further one or more protection units, between said first and second interconnect fabrics are provided; and the configuring of said further protection unit is (directly or indirectly) controlled by said selected transaction initiation functional module.

In an embodiment of the invention an (electric) arrangement is provided, wherein said first interconnect fabric connecting the functional modules and providing communication between those functional modules, comprising a third interconnect fabric, for exchanging task specific trigger signals between functional modules, said third interconnect fabric comprising a trigger router module, able to route any input triggers to any output trigger, said trigger router module, being adapted to ensure that transaction initiating functional modules other than the selected transaction initiation functional module, have no uncontrolled access thereto via the third interconnect fabric, preferably said trigger router module, being configurable via said second interconnect fabric (while for the other remaining part of said first interconnect fabric protection units are provide in between said other remaining part and the functional modules).

In an embodiment of the invention an (electric) arrangement is provided, wherein said first interconnect fabric connecting the functional modules and providing communication between those functional modules, comprising a fourth interconnect fabric, comprising direct connections between (part of) the functional modules, whereby said protection means ensures that transaction initiating functional modules, other than the selected transaction initiation functional module, have no uncontrolled access to module(s) executing a function for and on its behalf, via the fourth interconnect fabric (by configuring those transaction initiating functional modules related protection unit accordingly).

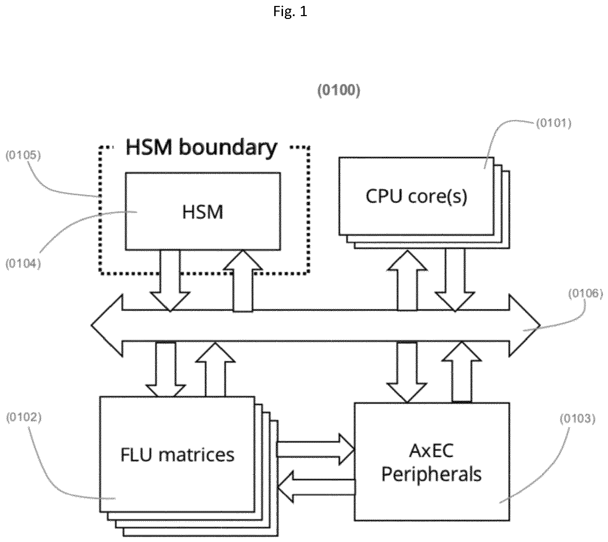

The invention is now illustrated on the basis of a conventional FPCU architecture (without Flexible hardware secure module) as shown in Figure 1 (0100), comprising:
- (0101) : One or multiple conventional processor cores. In such FPCU component, the processor cores are dedicated to the part of the application that do not require hard real-time processing.
- (0102) : One or multiple Flexible Logic Unit matrices. Each of them can optionally be capable of task switching.
- (0103) : Multiple sensor/actuator and hardware accelerator peripherals.
- (0104) : An "Hardware Security Module" (according to Evita terminology). This is a conventional security sub-system featuring :
   ∘ A local processor core and associated secure firmware
   ∘ Multiple cryptographic hardware accelerators.
   ∘ Multiple mechanism for protection against hacking attacks
- (0105) : This is the physical boundary of the Security sub-system. This notion is important in the sense where it clearly specifies the communications channels between the secure domain and the application domain. Within this boundary, all the hardware content is strictly reserved to the secure computing unit (like CPU but also FLU is possible) and cannot be accessed from other computing units (CPU or other) of the component.
- (0106) : An arbitrary complex interconnect network that allows different kinds of communications between elements of the system (bus communications, interrupts, triggers, ...)

As explained above, the state-of-art solution based on software does not properly solve the problems.

So, the invented concept is about taking benefit of the existence of the flexible logic unit and /or mathematical accelerators present in the (so-called AxEC) sub-system to extend the "boundary" of the HSM module. This resource allocation is intended to be done dynamically at runtime so that the AxEC resource usage can be adapted to any in-field situations.

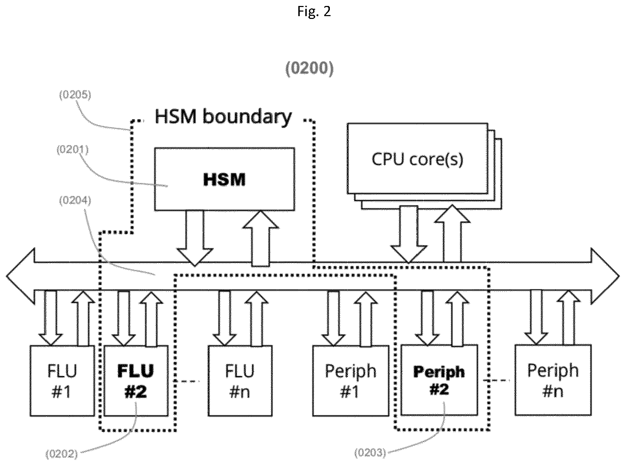

The Figure 2 (0200) explains the concept on an example.

In this example:
- The conventional security module (0201) functionality is extended by using one partition of FLU (0202) and/or (and preferably both) a hardware accelerator (0203).
- Thanks to dedicated mechanisms (0204) (explained further) within interconnect structure, the above elements are made exclusive for HSM usage. This means that those resources become "invisible" to any master of the SOC but the HSM itself.
- Therefore, the effective secure sub-system physical boundary (0205) is extended to integrate some real-time computing power of the AxEC. This is the basic FHSM concept.

More generally speaking the electric arrangement is provided, which, comprises: (a) functional modules (such as HSM, CPU, FLU), whereby such functional module may need another functional module (FLU, Peripheral) to execute a (security) function for and on its (exclusive) behalf.

As introduced above, the FHSM concept consists in virtually extending the secure sub-system boundary towards AxEC computing resources (FLU, Peripheral).

The hardware mechanisms that are further defined strictly guarantee that any resource allocated to the HSM cannot be influenced by other parts of the SOC. This means that any communication channel for which the resource is a "slave" (not the initiator of the communication) should be restricted so that only the components being part of the FHSM boundary are able to initiate communication on this channel. This means that specific "isolation" hardware is needed to reach this goal.

**Note :** The communication channels for which the resource is a "master" do not need special care.

Depending on the type of communication channel, the isolation mechanism may differ as explained further.

The different types of communication channels are:
- **System bus :** this kind of channel relies on bus transfer protocols (AXI, AHB, APB, OCP, ...). This kind of channel is a set of signals and vectors that work together in a sequence according to pre-defined protocols.
- **Direct data bus :** this kind of channel is a simple vector of data, optionally associated with a dataValid/dataAck validation protocol.
- **Trigger:** this kind of channel is a single bit wire.
- **Clock/reset:** this kind of signal must be handled properly to avoid semi invasive security attacks.

As said the invention is about providing security by enabling (long-term) use of (as functional module) a specific secure sub-system featuring state-of-art cryptographic and anti-hacking functions **and able to handle new security challenges** by defining a specially adapted architecture within such FPCU kind of components, more in particular making it future proof by allowing a secure sub-system to rely (exclusively) on other resources in the arrangement, wherein especially the communication architecture requires attention.

In essence since the invention relates to an (electric) arrangement, comprising: (a) functional modules; and(b) a interconnect fabric connecting the functional modules and providing communication between those functional modules; for the purpose set forth above the (electric) arrangement has to be being arranged in that a selected functional module has (temporally) exclusive access to another functional module(s), executing a function for and on its behalf, but avoiding uncontrolled access thereto (via the interconnect fabric) via protection means (attached to the communication architecture defined by the interconnect fabric).

The possible different available communication mechanisms (defining the communication architecture) are now described in more detail.

### TRIGGER MECHANISM

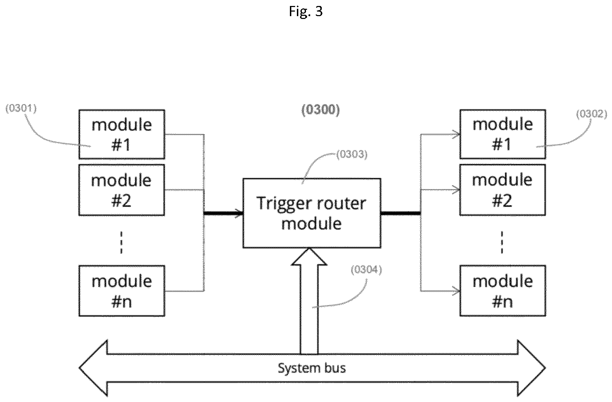

Figure 3 (0300) explains the triggers hardware management architecture within an FPCU component:
- (0301) a set of SOC modules are able to drive one or multiple triggers. In this context a "module" can be a FLU partition, an AxEC peripheral, or an AxEC computing accelerator.
- (0302) a set of SOC modules are able to take as input one or multiple triggers. Note that some modules may have both input and output triggers.
- (0303) A central trigger routing function is able to route any input trigger to any output trigger based on a set of configuration registers accessed through system bus slave configuration interface (0304)

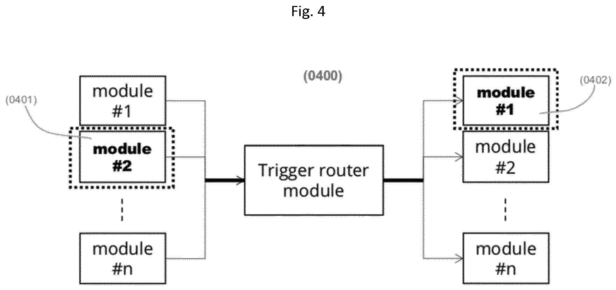

Now, let's consider the following case as shown in Figure 4 (0400) where some of the modules are selected for FHSM exclusive access. In this case, what is important is to insure that:
- Right module #1 (0402) is able to receive a trigger from left module #2 (0401). This is not a security breach because both modules are within the FHSM virtual boundary.
- Right module #1 (0402) cannot receive any trigger from any module but the left module #2 (0401). Thus, no trigger information is able to cross the FHSM virtual boundary.

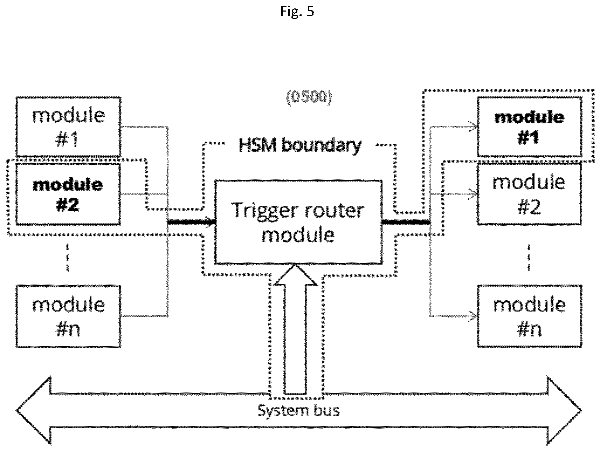

As mentioned in Figure 3 (0300) the trigger router configuration is done through system bus slave interface. The consequence is the router must also be considered as being included in FHSM virtual boundary as conceptually illustrated in Figure 5 (0500). Therefore, its slave configuration interface has to be managed to achieve this. A particular embodiment to achieve this is described further.

With this new virtual boundary, the HSM module is able to decide for proper trigger routing and then insure that the conditions above are met.

The edge effect consequence is that the HSM sub-system become also responsible for the configuration of all triggers of the SOC., including those that are not part of the security activities. This is not a problem. It is always possible for the Application CPU to configure the necessary non-secure trigger. The only constraint is that the application CPU is not able to do it directly by writing trigger router registers. Instead it must transmit a specific request toward the HSM. Then this one can check the secure aspect of this demand and accept or refuse the trigger routing request accordingly.

Generally speaking an (electric) arrangement, wherein said first interconnect fabric connecting the functional modules and providing communication between those functional modules, comprises a (further) third interconnect fabric, for exchanging task specific trigger signals between functional modules, said third interconnect fabric comprising a trigger router module, able to route any input triggers to any output trigger, should ensure that said trigger router module is adapted to ensure that functional modules other than the selected functional module, have no uncontrolled access thereto via the third interconnect fabric.

### CLOCK AND RESET MANAGEMENT

As said a FPCU may have different available communication mechanisms, which can be combined. Another FPCU (internal) communication mechanism is the clock and reset mechanism. As said before each communication mechanism requires adaptation to ensure that the expanding security functions to other modules does not result in safety- and timing issues.

Fortunately the clock&reset management for FHSM is pretty similar to the triggers management.

So, the module(s) that is(are) responsible for generating clock and reset must be under exclusive control of the HSM module (like trigger router in previous section).

Therefore, the configuration interfaces of the clock&reset manager(s)shall be managed likewise described further. And, if the main CPU needs some clock&reset operation, tt would post a request towards the HSM module that shall check for security validity of the request and eventually execute the requested configuration.

As before an (electric) arrangement is hence provided, wherein said first interconnect fabric connecting the functional modules and providing communication between those functional modules, comprises a (further) third interconnect fabric, related to clock and reset, said third interconnect fabric comprising a clock&reset management module, adapted to ensure that functional modules other than the selected functional module, have no uncontrolled access thereto via the third interconnect fabric.

### SLAVE INTERFACES

In a typical SOC architecture like the one used in FPCU, all functional modules are connected to an arbitrary complex interconnect fabric that allows bidirectional data transmission between transaction initiators and targets.

In the most general case, all the initiators have the possibility to access any of the targets thanks to memory mapping of target resources. However, for software execution robustness and functional safety reasons, a preferred architecture in accordance with the invention features a multi-layer MPU (Memory Protection Unit) structure that allows to fine-grain filter the interconnect memory map access right based on transaction characteristic :
- Identifier of the initiator module
- Address of the access
- Direction of the access (read/write)
- Security level of the access
- ...

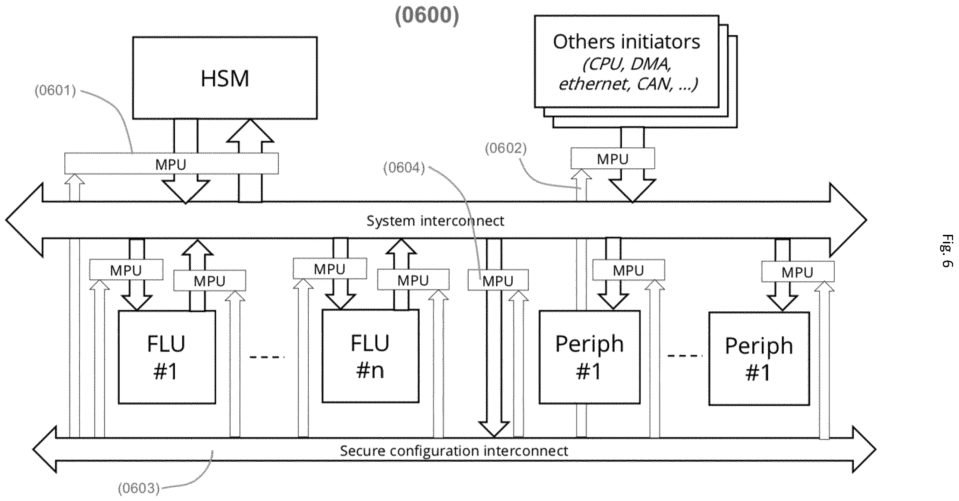

So, a typical interconnect structure in FPCU as shown in Figure 6 (0600) can be summarized as below:
- (0601) : A multiplicity of MPU components are inserted on interconnect sockets.
   ∘ On initiator side, the functional safety requirements are requesting the MPUs to be inserted unconditionally.
   ∘ On target side, the MPU are optional. They can be included anyway if the granularity of memory-map regions on initiator side MPUs is too large. Having MPU on target side offers a very fine-grain control of the memory-map protection.
- (0602) : Each MPU features a configuration port which is itself a target socket on a sub-part of the SOC interconnect structure (0603).
- This part of interconnect is itself protected by an MPU (0604)

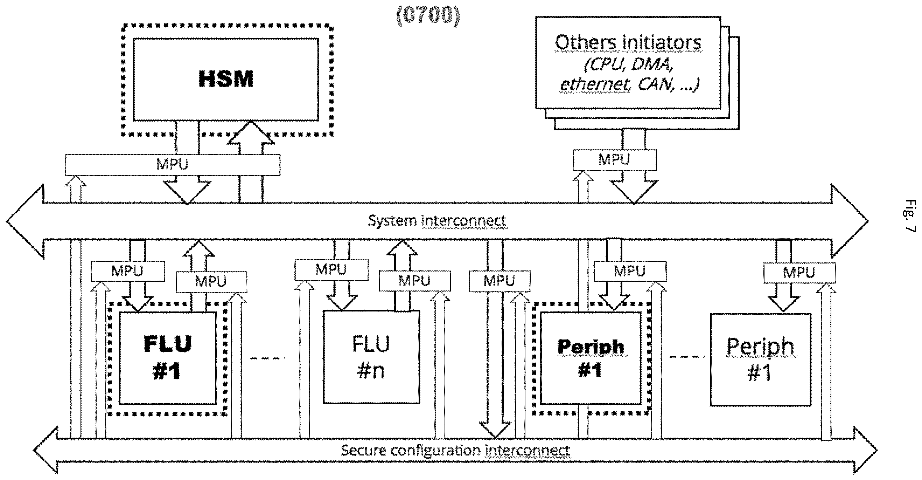

Now, let's imagine that, at runtime, the HSM module needs to use some computing resource within AxEC, as this is the concept introduced by the invention, as illustrated in Figure 7 (0700).

In the example above, the security requirement is that FLU-#1 and Periph-#2 cannot be accessed through interconnect by any initiator but the HSM sub-system.

So, this means that the all the MPUs being on the interconnect socket of those modules must be configured by the HSM module.

So this means that the access to the configuration interface of those MPUs must be protected the same way as the modules interfaces.

So, this means that the MPU controlling the access to the secure configuration interconnect must also be controlled by the HSM.

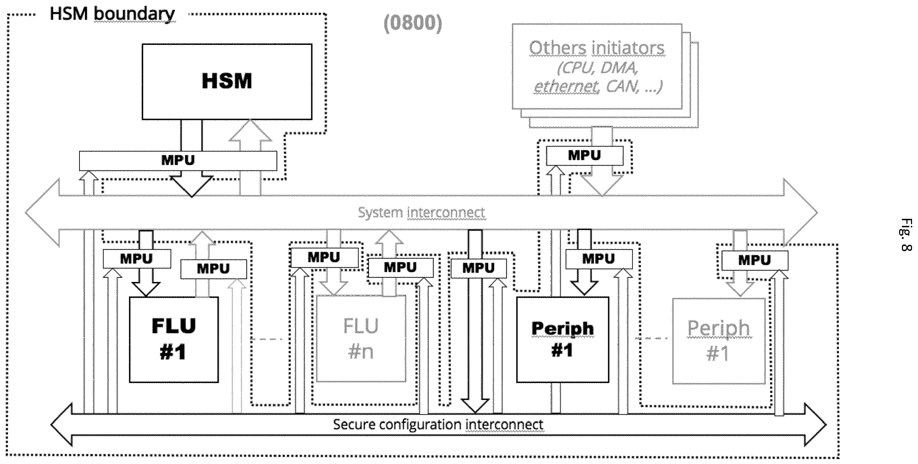

Consequently, in this architecture, all the MPUs of the SOC must be configured **only** by the HSM sub-system, expanding the virtual boundary as illustrated in Figure 8 (0800).

If the main CPU needs some MPU configuration for non-secure reasons, then it would address a service request to the HSM module. And then this one will configure the MPU accordingly after checking of the security validity of the request.

In essence for the above architecture the previously mentioned (communication) protection means comprises: one or more protection units provided (between said modules and part of said first interconnect fabric); whereby the configuring of said protection units is (directly or indirectly) controlled by said selected transaction initiation functional module.

### USE OF FLEXIBLE LOGIC UNIT IN THE FLEXIBLE HARDWARE SECURE MECHANISM

So far, the communication mechanism in a SOC and the required adaptations for the flexible hardware approach (FSHM) in accordance with the invention are discussed. Preferably the FHSM concept takes benefit of the hardware computing resource of the AxEC for security purpose.

The required FLU characteristics to enable this concept are now addressed.

First the basic cases wherein no segregation nor task switching capability is foreseen or used in the FLU is addressed.

In the case where an FPCU component is equipped with a single FLU matrix that does not provide tasks witching capabilities, then we can imagine two cases :
- Either the embedded FPGA is able to support in-field partial reconfiguration.
   ∘ In this case, the HSM could have the possibility to reserve a region of the eFPGA for FHSM purpose and then fill it with dedicated bitstream.
   ∘ However, this solution is not secure enough because:
      • It is almost impossible to demonstrate that there is not possible interactions between secure and non-secure parts of the matrix.
      • The management of the sub-part bitstream is handled by a software application whose security level cannot be certified.
- Or, the FLU is fully dedicated to FHSM or application exclusively at any point of time.
   ∘ This is OK in terms of security level
   ∘ However, it makes the FPCU component almost unusable for targeted application domains where the real-time computing cannot be interrupted.

In conclusion, while technically feasible in case of full dedication, an FPCU featuring a single mono-task FLU matrix is not a good candidate for implementing the FHSM concept.

There exist concepts wherein the FPCU component contains at least 2 FLU matrices that can optionally be used jointly as a big single one. In this case the FHSM concept is highly relevant:
- The application shall use some of the FLU matrices for real-time algorithms.
- The HSM may use remaining free FLU matrices for security purpose (applying the FHSM boundary management operations described)
- The allocation of FLU matrices to HSM or application can be done at runtime if needed.
- The demonstration of the mutual independence between secure FLU parts and non-secure parts becomes then straightforward.

There exist also concepts (combinable with the above one) wherein the FPCU component contains at least one FLU matrix that is able to execute task switching.

In this case the FHSM concept is also relevant, but a little bit more complex to use:
- The usage of the FLU matrix shall be temporally split in two periodic temporal windows :
   ∘ A time window is reserved to real-time application
   ∘ A time window is reserved to HSM
- The FLU is configured for task switching between both contexts.
- The demonstration of the mutual independence between secure FLU parts and non-secure parts is possible thanks to micro-architecture principles.

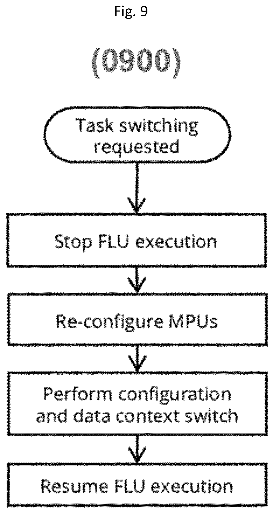

The difficulty here is to handle properly the FHSM boundaries as described because the matrix must switch between secure boundaries and non-secure boundaries. This makes the switching sequence more complex than switching between two applicative tasks. The mechanism to do this is shown in Figure 9 (0900). Of course, all the sequence must be managed exclusively by the HSM module for security reasons. The previous sequence is technically possible. However, the latency between two FLU execution windows because of the MPU configuration must be verified for real-time applications.

In essence the above described electric arrangements, wherein one or more of said functional modules being a hardware programmable unit, being a programmable logic matrix, is adapted for sequentially execution of at least two tasks and/or preferably comprise a plurality of flexible logic unit arrangements arranged side-by-side and adapted for being (run-time) pair-wise either physically connected or isolated, and describes the relation switching mechanisms must be adapted for handle properly the FHSM requirements.

### FHSM USE CASES

### HARDWARE ACCELATOR

Using FHSM concept, it is possible to dedicate to the secure sub-system some eFPGA resource and mathematical accelerators so that new cryptographic algorithm can be implemented.

The benefits of such an approach compared to a simple software implementation of the algorithm are the following:
- An FPGA architecture is particularly efficient at executing cryptographic algorithm because of the massively parallel computing capability it provides.
- The power perturbations signature of an FPGA activity is much noisier than the signature of a CPU core. So, the algorithm computing is more resilient to non-invasive security attacks.
- Performance of cryptography algorithms is higher when implemented in hardware

In essence the electric arrangement in accordance with the invention is now used in that the one or more of said functional modules being a hardware programmable unit (0202), being a programmable logic matrix are configured to at least in part executed a cryptography method.

### SAFE SECURITY

Let's take the simple FPCU architecture featuring 2 FLU matrices :
- One is allocated to real-time application
- Second is allocated to FHSM

The first FLU content is not able to access any information from second one (FHSM boundary explained above)

However, there is no security problem for the second FLU section to have access to any information within the first FLU part. So, the secure FLU content can have real-time information of the activity of the running application.

This capability allows having secure activity and application activity strictly synchronized.

It is also possible to implement in a FLU matrix a cryptography algorithm to duplicate a reference algorithm implemented either in the hard part of FHSM or in software. This results in a lockstep implementation of a security algorithms which allows to check the correctness of the execution of the duplicated algorithm.

Several implementations are possible here:
- Algorithm duplicated in the FLU is strictly the same as the reference one (same RTL): it ensures a spatial and temporal redundancy
- Algorithm duplicated in the FLU differs from the reference one (same function with different RTL): it ensures a spatial and temporal redundancy and correctness of the result (Two different algorithms produce the same result)

### SECURE ATTACKS DETECTION (DIGITAL SENSOR)

An eFPGA matrix like FLU can be configured in such a way that it can detect invasive and semi-invasive attacks based on physical effects on internal propagation delays.

### COUNTER MEASURES

FLU matrix are well intended to implement new cryptography algorithms, but in the same way some hardware countermeasures can also be implemented in FLU matrix of FHSM in order to increase the security level of the component addressing new attack technics.

As an example some random noise could be generated by the FLU to shuffle the power profile of the component and thus increase resistance of the component to Side Channel Attacks.

## Claims

1. An electric arrangement, comprising: i) functional modules (0101, 0102, 0103, 0104), which can serve both as transaction initiators or transaction targets, whereby a transaction initiating functional module may need a transaction target functional module to execute a function for and on behalf of said transaction initiating functional module; ii) a first interconnect fabric (0106) connecting the functional modules and providing communication between those functional modules; wherein the electric arrangement being arranged in that a selected transaction initiation functional module has temporally exclusive access to one or more transaction target functional modules executing a function for and on behalf of said selected transaction initiating functional module, to ensure that transaction initiating functional modules other than the selected transaction initiation functional module, have no uncontrolled access thereto, wherein said selected transaction initiation functional module being a hardware secure module (0105),
**characterized in that**, for ensuring that a selected transaction initiation functional module has temporally exclusive access to one or more transaction target functional modules executing a function for and on behalf of said selected transaction initiating functional module, protection means (0601, 0602) are provided, to ensure that transaction initiating functional modules other than the selected transaction initiation functional module, have no uncontrolled access thereto; and
wherein said protection means comprises: one or more protection units provided between said modules and part of said first interconnect fabric for each of said transaction target functional modules; whereby the configuring of said protection units is controlled by said selected transaction initiation functional module.

2. The electric arrangement as in claim 1, wherein said protection units provide transaction filtering.

3. The electric arrangement as in any of the preceding claims, wherein transaction initiating functional modules other than the selected transaction initiation functional module, have only access via the first interconnect fabric after initiating by said other transaction initiating functional modules a service request to said selected transaction initiation functional module to configure protection units connected to such other transaction initiating functional modules accordingly subject to approval of the selected transaction initiation functional module.

4. The electric arrangement as in claim 1, wherein one or more protection units are further connected by one or more second interconnect fabrics (0603) for configuring those protection units, whereby further one or more protection units, between said first and second interconnect fabrics are provided; and the configuring of said further protection units is controlled by said selected transaction initiation functional module.

5. The electric arrangement as in any of the preceding claims, wherein said first interconnect fabric connecting the functional modules and providing communication between those functional modules, comprising a third interconnect fabric, for exchanging task specific trigger signals between functional modules, said third interconnect fabric comprising a trigger router module (0303), able to route any input triggers to any output trigger, said trigger router module, being adapted to ensure that transaction initiating functional modules other than the selected transaction initiation functional module, have no uncontrolled access thereto via the third interconnect fabric,

6. The electric arrangement as in claim 5 wherein said trigger router module is configurable via said second interconnect fabric.

7. The electric arrangement as in any of the preceding claims, wherein said first interconnect fabric connecting the functional modules and providing communication between those functional modules, comprising a fourth interconnect fabric, comprising direct connections between part of the functional modules, whereby said protection means ensures that transaction initiating functional modules, other than the selected transaction initiation functional module, have no uncontrolled access to the one or more modules executing a function for and on behalf of selected transaction initiation functional module, via the fourth interconnect fabric.

8. The electric arrangement as in any of the preceding claims wherein access for a transaction initiating functional modules to a transaction target functional module is partly arranged via a system bus and an access unit, preferably supporting memory mapping, to filter the access based on transaction action characteristics.

9. The electric arrangement as in claim 8, wherein said access unit acts as said protection unit.

10. The electric arrangement as in any of the preceding claims, wherein one or more of said functional modules being a hardware programmable unit (0202), being a programmable logic matrix, adapted for sequential execution of at least two tasks and/or comprise a plurality of flexible logic unit arrangements arranged side-by-side and adapted for being either physically connected or isolated.

11. The electric arrangement as in any of the preceding claims, wherein one or more of said functional modules is a peripheral hardware unit (0203), optionally dedicated to electric control unit hardware functions or mathematical accelerator functions.

12. The electric arrangement as in any of the preceding claims, wherein one or more of said functional modules is a software programmable unit (0101), preferably a microprocessor core or a graphic processor core.

13. The electric arrangement of claim 10 and 11, or 10 and 12, or 10, 11 and 12, being a heterogeneous hardware system.

14. The electric arrangement of claim 5 or 6, wherein trigger initiating functional modules transmit trigger routing requests to said hardware secure module.

15. The electric arrangement of claim 10, wherein at least one of said programmable logic matrix being used by said hardware secure module for security in that said programmable logic is configured at least in part for execution of a cryptographic algorithm.

## Patentansprüche

1. Elektroanlage, umfassend: (i)
Funktionsmodule (0101, 0102, 0103, 0104), die sowohl als Transaktionsinitiatoren als auch als Transaktionsziele fungieren können, wobei ein Transaktionseinleitungs-Funktionsmodul womöglich ein Transaktionsziel-Funktionsmodul benötigt, um eine Funktion für und im Namen des Transaktionseinleitungs-Funktionsmoduls auszuführen; (ii)
eine erste Verbindungsstruktur (0106), die die Funktionsmodule verbindet und eine Kommunikation zwischen diesen Funktionsmodulen herstellt; wobei die Elektroanlage so angeordnet ist, dass ein ausgewähltes Transaktionseinleitungs-Funktionsmodul einen zeitlich exklusiven Zugriff auf ein oder mehrere Transaktionsziel-Funktionsmodul(e) hat, die eine Funktion für und im Namen des ausgewählten Transaktionseinleitungs-Funktionsmoduls ausführen, um sicherzustellen, dass andere Transaktionseinleitungs-Funktionsmodule als das ausgewählte Transaktionseinleitungs-Funktionsmodul keinen unkontrollierten Zugriff darauf haben, wobei das ausgewählte Transaktionseinleitungs-Funktionsmodul ein Hardware-Sicherheitsmodul (0105) ist, **dadurch gekennzeichnet, dass** zum Sicherstellen, dass ein ausgewähltes Transaktionseinleitungs-Funktionsmodul einen zeitlich exklusiven Zugriff auf ein oder mehrere Transaktionsziel-Funktionsmodul(e) hat, die eine Funktion für und im Namen des ausgewählten Transaktionseinleitungs-Funktionsmoduls ausführen, Schutzmittel (0601, 0602) vorgesehen sind, um sicherzustellen, dass andere Transaktionseinleitungs-Funktionsmodule als das ausgewählte Transaktionseinleitungs-Funktionsmodul keinen unkontrollierten Zugriff darauf haben; wobei das Schutzmittel umfasst: eine oder mehrere Schutzeinheiten, die zwischen den Modulen und einem Teil der ersten Verbindungsstruktur für jedes der Transaktionsziel-Funktionsmodule vorgesehen sind; wobei das Konfigurieren der Schutzeinheiten durch das ausgewählte Transaktionseinleitungs-Funktionsmodul gesteuert wird.

2. Elektroanlage nach Patentanspruch 1, wobei die Schutzeinheiten eine Transaktionsfilterung vorsehen.

3. Elektroanlage nach einem der vorhergehenden Patentansprüche, wobei andere Transaktionseinleitungs-Funktionsmodule als das ausgewählte Transaktionseinleitungs-Funktionsmodul nur Zugriff über die erste Verbindungsstruktur haben, nachdem sie durch die anderen Transaktionseinleitungs-Funktionsmodule eine Dienstanforderung an die ausgewählte Transaktionseinleitung eingeleitet haben, zum Konfigurieren von Schutzeinheiten, die mit solchen anderen Transaktionseinleitungs-Funktionsmodulen verbunden sind, entsprechend vorbehaltlich der Zustimmung des ausgewählten Transaktionseinleitungs-Funktionsmoduls.

4. Elektroanlage nach Patentanspruch 1, wobei eine oder mehrere Schutzeinheiten ferner durch eine oder mehrere zweite Verbindungsstruktur(en) (0603) verbunden sind, um diese Schutzeinheiten zu konfigurieren, wodurch ferner eine oder mehrere Schutzeinheiten zwischen den ersten und zweiten Verbindungsstrukturen bereitgestellt werden; und das Konfigurieren der weiteren Schutzeinheiten durch das ausgewählte Transaktionseinleitungs-Funktionsmodul gesteuert wird.

5. Elektroanlage nach einem der vorhergehenden Patentansprüche, wobei die erste Verbindungsstruktur, die die Funktionsmodule verbindet und eine Kommunikation zwischen diesen Funktionsmodulen herstellt, eine dritte Verbindungsstruktur zum Austauschen aufgabenspezifischer Triggersignale zwischen Funktionsmodulen umfasst, wobei die dritte Verbindungsstruktur umfasst: ein Trigger-Router-Modul (0303), das jeden Eingabe-Trigger zu jedem Ausgabe-Trigger leiten kann, wobei das Trigger-Router-Modul angepasst ist, um sicherzustellen, dass andere Transaktionseinleitungs-Funktionsmodule als das ausgewählte Transaktionseinleitungs-Funktionsmodul keinen unkontrollierten Zugriff darauf über die dritte Verbindungsstruktur hat.

6. Elektroanlage nach Patentanspruch 5, wobei das Trigger-Router-Modul über die zweite Verbindungsstruktur konfigurierbar ist.

7. Elektroanlage nach einem der vorhergehenden Patentansprüche, wobei die erste Verbindungsstruktur, die die Funktionsmodule verbindet und eine Kommunikation zwischen diesen Funktionsmodulen herstellt, eine vierte Verbindungsstruktur umfasst, die direkte Verbindungen zwischen einem Teil der Funktionsmodule umfasst, wodurch dieses Schutzmittel sicherstellt, dass andere Transaktionseinleitungs-Funktionsmodule als das ausgewählte Transaktionseinleitungs-Funktionsmodul über die vierte Verbindungsstruktur keinen unkontrollierten Zugriff auf ein oder mehrere Modul(e) haben, die eine Funktion für und im Auftrag des ausgewählten Transaktionseinleitungs-Funktionsmoduls ausführen.

8. Elektroanlage nach einem der vorangehenden Patentansprüche, wobei der Zugriff für ein transaktionseinleitendes Funktionsmodul auf ein Transaktionsziel-Funktionsmodul teilweise über einen Systembus und eine Zugriffseinheit angeordnet ist, die vorzugsweise eine Speicherabbildung unterstützt, um den Zugriff basierend auf Transaktionscharakteristiken zu filtern.

9. Elektroanlage nach Patentanspruch 8, wobei die Zugangseinheit
als Schutzeinheit fungiert.

10. Elektroanlage nach einem der vorangehenden Patentansprüche, wobei mindestens ein Funktionsmodul eine programmierbare Hardwareeinheit (0202) ist, die eine programmierbare Logik-Matrix ist, die zur sequentiellen Ausführung von mindestens zwei Aufgaben angepasst ist und/oder eine Vielzahl flexibler logischer Einheitsanordnungen umfasst, die Seite an Seite angeordnet und dafür ausgelegt sind, entweder physikalisch verbunden oder isoliert zu werden.

11. Elektroanlage nach einem der vorhergehenden Patentansprüche, wobei mindestens ein Funktionsmodul
eine periphere Hardwareeinheit (0203) ist, die wahlweise Hardwarefunktionen der elektrischen Steuereinheit oder mathematischen Beschleunigerfunktionen zugeordnet ist.

12. Elektroanlage nach einem der vorangehenden Patentansprüche, wobei mindestens ein Funktionsmodul eine softwareprogrammierbare Einheit (0101) ist, vorzugsweise ein Mikroprozessor- oder Grafikprozessorkern.

13. Elektroanlage nach Patentanspruch 10 und 11 oder 10 und 12 oder 10, 11 und 12, die ein heterogenes Hardwaresystem ist.

14. Elektroanlage nach Patentanspruch 5 oder 6, wobei Trigger-initiierende Funktionsmodule Trigger-Routing-Anforderungen an das Hardware-Sicherheitsmodul übertragen.

15. Elektroanlage nach Patentanspruch 10, wobei mindestens eine der programmierbaren Logik-Matrix vom Hardware-Sicherheitsmodul zur Sicherheit verwendet wird, indem die programmierbare Logik mindestens teilweise für die Ausführung eines kryptografischen Algorithmus konfiguriert ist.

## Revendications

1. Un dispositif électrique comprenant : (i)
les modules fonctionnels (0101, 0102, 0103, 0104), qui
peuvent servir à la fois d'initiateurs de transaction ou de cibles de transaction, dans lesquels un module fonctionnel initiateur de transaction peut nécessiter un module fonctionnel cible de transaction pour exécuter une fonction pour et au nom dudit module fonctionnel initiateur de transaction ; (ii)
une première structure d'interconnexion
(0106) reliant les modules fonctionnels et assurant la communication entre ceux-ci ; dans lequel le dispositif électrique est organisé de telle sorte qu'un module fonctionnel d'initiation de transaction sélectionné a un accès temporairement exclusif à un ou plusieurs modules fonctionnels cibles de transaction exécutant une fonction pour et au nom dudit module fonctionnel d'initiation de transaction sélectionné, pour garantir que les modules fonctionnels d'initiation de transaction autres que le module fonctionnel d'initiation de transaction sélectionné n'ont pas d'accès non contrôlé à celui-ci, dans lequel ledit module fonctionnel d'initiation de transaction sélectionné est un module matériel sécurisé (0105),
**caractérisé en ce que**, pour garantir qu'un module fonctionnel d'initiation de transaction sélectionné a un accès temporairement exclusif à un ou plusieurs modules fonctionnels cibles de transaction exécutant une fonction pour et au nom dudit module fonctionnel d'initiation de transaction sélectionné, des moyens de protection (0601, 0602) sont prévus, pour garantir que des modules fonctionnels d'initiation de transaction autres que le module fonctionnel d'initiation de transaction sélectionné n'ont pas d'accès non contrôlé à ceux-ci ;
et dans lequel lesdits moyens de protection comprennent une ou plusieurs unités de protection prévues entre lesdits modules et une partie de ladite première structure d'interconnexion pour chacun desdits modules fonctionnels cibles de transaction ; moyennant quoi la configuration desdites unités de protection est commandée par ledit module fonctionnel d'initiation de transaction sélectionné.

2. Le dispositif électrique selon la revendication 1, dans lequel lesdites unités de protection fournissent un filtrage des transactions.

3. Le dispositif électrique selon l'une quelconque des revendications précédentes, dans lequel les modules fonctionnels d'initiation de transaction autres que le module fonctionnel d'initiation de transaction sélectionné, n'ont accès que par l'intermédiaire de la première structure d'interconnexion après l'initiation par lesdits autres modules fonctionnels d'initiation de transaction d'une demande de service audit module fonctionnel d'initiation de transaction sélectionné pour configurer les unités de protection connectées à ces autres modules fonctionnels d'initiation de transaction en conséquence sous réserve de l'approbation du module fonctionnel d'initiation de transaction sélectionné.

4. Le dispositif électrique selon la revendication 1, dans lequel une ou plusieurs unités de protection sont reliées par une ou plusieurs deuxièmes structures d'interconnexion (0603) pour configurer ces unités de protection, moyennant quoi une ou plusieurs unités de protection supplémentaires, entre lesdites première et deuxième structures d'interconnexion, sont fournies ; et la configuration desdites unités de protection supplémentaires est contrôlée par ledit module fonctionnel d'initiation de transaction sélectionné.

5. Le dispositif électrique selon l'une quelconque des revendications précédentes, dans lequel ladite première structure d'interconnexion reliant les modules fonctionnels et garantissant la communication entre ces modules fonctionnels, comprenant une troisième structure d'interconnexion, pour échanger des signaux de déclenchement spécifiques à une tâche entre les modules fonctionnels, ladite troisième structure d'interconnexion comprenant un module de routeur de déclenchement (0303), capable d'acheminer tout déclencheur d'entrée vers le déclencheur de sortie correspondant, ledit module routeur de déclenchement, étant adapté pour garantir que les modules fonctionnels d'initiation de transaction autres que le module fonctionnel d'initiation de transaction sélectionné, n'ont pas d'accès non contrôlé à celui-ci via la troisième structure d'interconnexion,

6. Le dispositif électrique selon la revendication 5, dans lequel ledit module routeur de déclenchement est
configurable via ladite deuxième structure d'interconnexion.

7. Le dispositif électrique selon l'une des revendications précédentes, dans lequel ladite première structure d'interconnexion reliant les modules fonctionnels et garantissant la communication entre ces derniers, comprenant une quatrième structure d'interconnexion, constituée de connexions directes entre une partie des modules fonctionnels, moyennant quoi lesdits moyens de protection garantissent que les modules fonctionnels d'initiation de transaction, autres que le module fonctionnel d'initiation de transaction sélectionné, n'ont pas d'accès non contrôlé à un ou plusieurs modules exécutant une fonction pour et au nom du module fonctionnel d'initiation de transaction sélectionné, via la quatrième structure d'interconnexion.

8. Le dispositif électrique selon l'une quelconque des revendications précédentes, dans lequel l'accès d'un module fonctionnel d'initiation de transaction à un module fonctionnel cible de transaction est partiellement agencé via un bus système et une unité d'accès, de préférence compatible avec la cartographie de mémoire, pour filtrer l'accès en fonction des caractéristiques de l'action de transaction.

9. Le dispositif électrique selon la revendication 8, dans lequel ladite unité d'accès agit comme ladite unité de protection.

10. Le dispositif électrique selon l'une quelconque des revendications précédentes, dans lequel un ou plusieurs desdits modules fonctionnels sont une unité programmable matérielle (0202), une matrice logique programmable, adaptée pour l'exécution séquentielle d'au moins deux tâches et/ou comprend une pluralité d'agencements flexibles d'unités logiques disposés côte à côte et adaptés pour être soit physiquement connectés, soit isolés.

11. Le dispositif électrique selon l'une quelconque des revendications précédentes, dans lequel un ou plusieurs desdits modules fonctionnels est
une unité matérielle périphérique (0203), éventuellement dédiée à des fonctions matérielles d'unité de commande électrique ou à des fonctions d'accélérateur mathématique.

12. Le dispositif électrique selon l'une quelconque des revendications précédentes, dans lequel un ou plusieurs desdits modules fonctionnels est une unité programmable logicielle (0101), de préférence un noyau de microprocesseur ou un noyau de processeur graphique.

13. Le dispositif électrique selon les revendications 10 et 11, ou 10 et 12, ou 10, 11 et 12, étant un système matériel hétérogène.

14. Le dispositif électrique selon la revendication 5 ou 6, dans lequel les modules fonctionnels d'initiation de déclenchement transmettent les demandes de routage de déclenchement au dit module matériel sécurisé.

15. Le dispositif électrique selon la revendication 10, dans lequel au moins une desdites matrices logiques programmables est utilisée par ledit module matériel sécurisé pour la sécurité en ce que ladite logique programmable est configurée au moins en partie pour l'exécution d'un algorithme cryptographique.
